# EUROPÄISCHE PATENTSCHRIFT

(11) **EP 1 059 507 B1**
(45) Veröffentlichungstag und Bekanntmachung des Hinweises auf die Patenterteilung: **05.11.2003**
(21) Anmeldenummer: 00250155.9
(22) Anmeldetag: 19.05.2000
(51) Int. Cl.: G01C 11/02

(54) **Kalibrationseinrichtung für optoelektronische Sensorsysteme**
Calibration system for optoelectronic sensor systems
Système d'étalonnage pour des systèmes de capteurs optoélectroniques

(30) Priorität: 07.06.1999 DE 19927012
(43) Veröffentlichungstag der Anmeldung: 13.12.2000
(73) Patentinhaber: Deutsches Zentrum für Luft- und Raumfahrt e.V., 53175 Bonn (DE)
(72) Erfinder: Börner, Anko, 10249 Berlin (DE)
(74) Vertreter: Effert, Bressel und Kollegen

(56) Entgegenhaltungen:
- DE-A- 3 802 219
- DE-A- 19 746 943
- FR-A- 2 713 785

## Beschreibung

Die Erfindung betrifft eine Kalibrationsvorrichtung für die Orientierungsparameter von digitalen optoelektronischen Sensorsystemen in Trägersystemen zur Femerkundung.

Digitale Sensoren spielen aufgrund ihrer Eigenschaft, Daten in digitaler Form aufzunehmen und diese dann an eine Empfangsstation zu übermitteln, in der Femerkundung schon heute eine wesentliche Rolle. Solche Systeme werden durch die Entwicklung auf dem Gebiet der Halbleiterelektronik in absehbarer Zeit auch in der Lage sein, in den Bereich der klassischen Photogrammetrie vorzustoßen und die analogen Aufnahmesysteme wie beispielsweise filmbasierte Luftbildkameras zu ersetzen.

Für die Auswertung der Sensordaten, vor allem aber bei photogrammetrischen Aufgabenstellungen, kommt dem Wissen um die Lage und die Position des Aufnahmesystems eine wesentliche Bedeutung zu. Nur bei deren Kenntnis können geometrischen Aussagen über die beobachteten Objekte getroffen werden. Die Genauigkeit dieser sogenannten Orientierungsparameter bestimmt die Güte der geometrischen Meßgrößen. Dabei geben die Parameter der äußeren Orientierung die Lage und Position des Projektzentrums des Aufnahmesystems an. Die Parameter der inneren Orientierung beschreiben den Zusammenhang zwischen Projektionszentrum und Bildebene.

Für analoge Luftbilder werden die Orientierungsparameter im allgemeinen mit Hilfe von Paßpunkten in Zuge der Bildauswertung bestimmt. Die Koordinaten dieser Paßpunkte sind gut vermessen. Unterstützt wird die Bestimmung der Orientierung in den letzten Jahren durch den Einsatz von GPS und Navigationssystemen.

Besonders problematisch erweist sich dieser klassische Ansatz bei der Bestimmung der Orientierung für Bilddaten, die von Zeilenscannern aufgenommen wurden. Aufgrund des Fehlens einer starren Bildgeometrie müssen die Parameter der Orientierung zu jedem Zeitpunkt, zu dem eine Bildzeile aufgenommen wird, neu bestimmt werden.

Eine derartige Parameterbestimmung ist beispielsweise aus der DE 38 02 219 A1 bekannt, wobei mittels einer einem oder mehreren Linienabtastem zugeordneten, optoelektronischen, flächenhaft aufnehmenden Kamera oder einer Kombination solcher Kameras in regelmäßigen Zeitabständen eine Serie von einander überdeckenden Einzelaufnahmen angefertigt wird, wobei jeweils die Positionen korrespondierender Bildpunkte oder Bildzonen in dem sich überdekkenden Bereich von benachbarten einzelnen Flächenaufnahmen zur gegenseitigen Orientierung der Aufnahmepositionen der Flächenkamera ausgewählt werden und die Orientierungsdaten von der optoelektronischen Flächen-Kamera durch festes Ausrichten oder Messen der relativen Ausrichtung auf die Linienabtaster unterstützt durch eine zeitliche Zuordnung beider Datenströme übertragen werden. Zur Durchführung des Verfahrens werden vorzugsweise zwischen den Linienabtastem flächenhafte Detektoren in der gleichen Fokalebene angeordnet.

Während die mit herkömmlichen Methoden der Photogrammetrie gewonnenen Orientierungsparameter sich immer auf das Projektionszentrum beziehen, ergeben sich beim Messen dieser Größen einige Probleme. Wird die Position mittels GPS bestimmt, so wird in der Regel die Position der GPS-Antenne bestimmt. Die drei Rotationswinklel werden ebenfalls nicht bezüglich des Projektionszentrums des Sensors gemessen. Kreiselsysteme registrieren darüber hinaus in der Regel nur Änderungen der Winkelgeschwindigkeit. Zur Bestimmung eines Absolutwinkels sind mindestens zu einem Zeitpunkt Referenzwinkel notwendig. Daher unterliegen alle sechs Parameter der äußeren Orientierung einem Offset. Diese Größen sind nicht bekannt und müssen durch Zusatzmessungen, beispielsweise mit Theodoliten oder durch Auswertung von Paßpunkten, bestimmt werden. Dadurch entstehen ein meßtechnischer Mehraufwand sowie zusätzliche Fehlerquellen. Des weiteren verhindert dies eine vollständige Onboard-Verarbeitung.

Aus der DE 43 14 742 A1 ist eine Anordnung zur hochgenauen Datengewinnung aus der Luft bekannt, umfassend ein Sensorsystem mit mindestens nichtbildgebenden Sensoren zur Feststellung von Anomalien der Leitfähigkeit und/oder Störungen des Erdmagnetfeldes im zu sondierenden Areal bzw. Boden sowie ein Flugführungssystem, welches mit einer differentiellen Positionsbestimmungseinrichtung zusammenwirkt, wobei das Sensor- und Flugführungssystem in einem Drehflügler angeordnet sind. Die Differentielle Positionsbestimmungseinrichtung weist an einem festen Ort mit bekannten Koordinaten in der Nähe des zu sondierenden Areals eine GPS-Referenzstation auf, welche mit einem DGPS-Sender zur Übertragung von Positionskorrekturdaten zu einem DGPS-Empfänger im Drehflügler zusammenwirkt.

Aus der DE 26 38 621 ist ein Vermessungsgerät bekannt, dessen Messwert, insbesondere Höhenwinkel oder Horizontalrichtung, von Horizontierungsfehlem bei der Aufstellung abhängig ist, insbesondere Theodolit, mit einer Vorrichtung zur Bestimmung von Horizontierungsfehlem des Gerätes, die mit dem Gerät fest verbindbar ist, wobei eine Recheneinheit, welche aus dem Messwert und Horizontierungsfehler den Wert der korrigierten Messgrösse berechnet, wobei der Horizontierungsfehler durch das Ausgangssignal einer Schottky-Barrier-Diode bestimmt ist, welche gerätefest montiert ist und mit einem an einer Flüssigkeitsoberfläche reflektierten Lichtstrahl beaufschlagt wird.

Der Erfindung liegt daher das technische Problem zugrunde, eine Kalibrationseinrichtung für die Orientierungsparameter von digitalen optoelektronischen Sensorsystemen in Trägersystemen (z.B. Flugzeuge oder Satelliten) zur Fernerkundung zu schaffen, die eine Offset-Bestimmung der Orientierungsparameter und deren Onboard-Weiterverarbeitung ermöglicht.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Die Kalibrationseinrichtung umfaßt jeweils mindestens eine Lage- und Positionsbestimmungseinrichtung, mindestens ein lichtemittierendes, optoelektronisches Bauelement, einen flächenhaften optischen Detektor und ein am Boden angeordnetes Referenzmodul, dessen Orientierungsparameter bekannt sind. Die von dem lichtemittierenden Bauelement kommende Strahlung wird von dem Referenzmodul reflektiert und vom flächenhaften Detektor erfaßt. Durch Vergleich der erfaßten Werte mit den bekannten Orientierungsparametern des Referenzmoduls läßt sich der Offset der Lage- und Positionsbestimmungseinrichtung bestimmen.

In einer bevorzugten Ausführungsform für ein als CCD-Zeilenscanner ausgebildetes optoelektronisches Sensorsystem sind die flächenhaften, als CCD-Matrizen ausgebildeten optischen Detektoren definiert zwischen den CCD-Zeilen in der gleichen Fokalebene angeordnet. Dadurch läßt sich die Auswertung der Kalibrierung mit der eigentlichen Auswerteelektronik des optoelektronischen Sensorsystems vornehmen, was den Aufbau wesentlich vereinfacht.

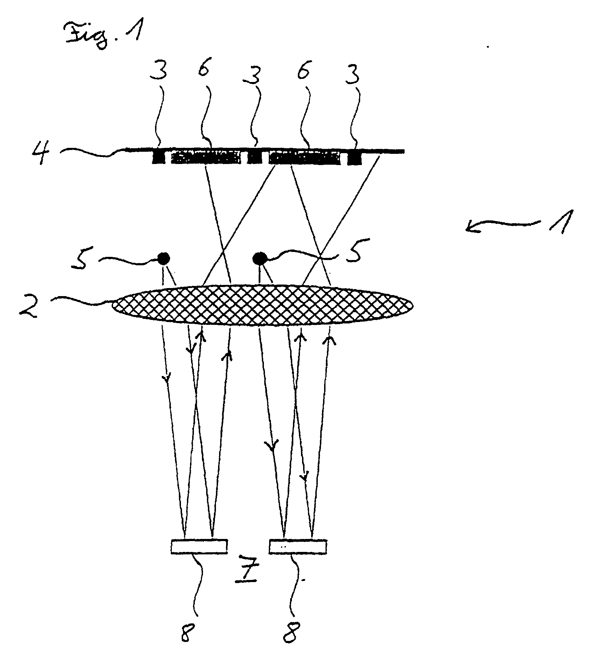

Die Erfindung wird nachfolgend anhand eines bevorzugten Ausführungsbeispieles näher erläutert. Die einzige Figur zeigt eine Seitenansicht eines optoelektronischen Sensorsystems mit integrierter Kalibrationsvorrichtung.

Das optoelektronische Sensorsystem 1 umfaßt eine Eingangsoptik 2 und drei CCD-Zeilen 3, die parallel zueinander in einer Fokalebene 4 angeordnet sind. Die Kalibrationsvorrichtung umfaßt zwei oder mehrere Laserdioden 5, zwei oder mehrere CCD-Matrizen 6 und ein Referenzmodul 7, das sich aus mehreren Teilmodulen 8 zusammensetzt. Die CCD-Matrizen 6 der Kalibrationsvorrichtung sind definiert zwischen den CCD-Zeilen 3 in der Fokalebene 4 angeordnet. Die Laserdioden 5 sind derart zwischen der Fokalebene 4 und der Eingangsoptik 2 angeordnet, daß diese den Sichtbereich der CCD-Zeilen 3 nicht stören. Somit ist die gesamte Kalibrationsvorrichtung mit Ausnahme des am Boden angeordneten Referenzmoduls 7 in das optoelektronisch Sensorsystem 1 integriert. Die Strahlenbündel der Laserdioden 5 werden durch nicht dargestellte Linsen aufgeweitet, treten durch die Eingangsoptik 2 aus und treffen auf das Referenzmodul 7, dessen Orientierungsparameter hochgenau bekannt sind. Vom Referenzmodul 7 werden die Strahlenbündel reflektiert und auf die Eingangsoptik 2 geworfen, von wo aus diese auf die Fokalebene 4 und die dort angeordneten CCD-Matrizen 6 abgebildet werden. Aus dem Signal aller CCD-Matrizen 6 kann dann die relative Lage und Position der Fokalebene 4 zum Referenzmodul 7 bestimmt werden. Anhand der gemessenen Lage- und Positionsdaten läßt sich dann der Offset für alle sechs Orientierungsparameter bestimmen, so daß eine Absolutanbindung der Meßgrößen für die sechs Orientierungsparameter gegeben ist. Für die Auswertung der CCD-Matrizen 6 kann die Auswerteeinheit für die CCD-Zeilen 3 benutzt werden, so daß sich der hardwaremäßige Aufwand im wesentlichen auf die CCD-Matrizen 6 und die Laserdioden 5 beschränkt.

Wird das optoelektronische Sensorsystem 1 beispielsweise für Zwecke der Photogrammetrie in einem Flugzeug eingesetzt, so kann das Referenzmodul 7 beispielsweise auf dem Flughafen an einer bestimmten Position einbetoniert werden, so daß sich das Referenzmodul 7 in einer unveränderbaren definierten Position und Lage befindet. Dadurch kann vor jedem Flug eine erneute Kalibrierung des optoelektronischen Sensorsystems 1 vorgenommen werden.

## Patentansprüche

1. Kalibrationseinrichtung für die Orientierungsparameter von digitalen optoelektronischen Sensorsystemen (1) in Trägersystemen zur Fernerkundung, umfassend ein Trägersystem mit einer oder mehreren Lage- und Positionsbestimmungseinrichtungen im Trägersystem, mit denen die Orientierungsparameter im Flug bestimmbar sind, mindestens ein optoelektronisches Bauelement (5), das derart gestaltet ist daß Licht in Bezug auf das Trägersystem in definierten Richtung emittierbar ist, mindestens einen flächenhaften optischen Detektor (6) im Trägersystem und mindestens ein am Boden angeordnetes Referenzmodul (7), dessen Orientierungsparameter bekannt sind, wobei durch Auswertung der vom lichtemittierenden Bauelement emittierten, vom Referenzmodul (7) reflektierten und vom flächenhaften Detektor empfangenen Strahlung die Offsets der Orientierungsparameter des oder der Lage- und Positionsbestimmungseinrichtungen bestimmbar sind.

2. Kalibrationsvorrichtung nach Anspruch 1, **dadurch gekennzeichnet, daß** die lichtemittierenden optoelektronischen Bauelemente als Laserdioden (5) ausgebildet sind.

3. Kalibrationseinrichtung nach Anspruch 1 oder 2, **dadurch gekennzeichnet, daß** die flächenhaften optischen Detektoren als CCD-Matrizen (6) ausgebildet sind.

4. Kalibrationsvorrichtung für einen CCD-Zeilenscanner nach einem der vorangegangenen Ansprüche, **dadurch gekennzeichnet, daß** zur Gewinnung von Femerkundungsdaten CCD-Zeilen (3) auf der Fokalebene (4) einer Optik und die flächenhaften optischen Detektoren zwischen den CCD-Zeilen (3) in der gleichen Fokalebene (4) angeordnet sind.

5. Kalibrationsvorrichtung nach Anspruch 4, **dadurch gekennzeichnet, daß** die lichtemittierenden optoelektronischen Bauelemente zwischen der Fokalebene (4) und der zugeordneten Optik (2) derart angeordnet sind, daß diese außerhalb des Strahlenganges der Nutzstrahlung der CCD-Zeilen (3) liegen.

6. Kalibrationsvorrichtung nach einem der vorangegangenen Ansprüche, **dadurch gekennzeichnet, daß** das Referenzmodul (7) als einbetonierter Spiegel ausgebildet ist.

## Claims

1. Calibration apparatus for calibrating the orientation parameters of digital optoelectronic sensor systems (1) in carrier systems for remote monitoring, said apparatus including a carrier system having one or more location- and position-determining means in the carrier system, the orientation parameters being determinable by said means in flight, at least one optoelectronic component (5) which is configured in such a manner that light can be emitted relative to the carrier system in a specific direction, at least one planar optical detector (6) in the carrier system and at least one reference module (7), which is disposed on the ground, and the orientation parameters of which are known, wherein the offsets of the orientation parameters of the location- and position-determining means are determinable by evaluating the radiation emitted by the light-emitting component, reflected by the reference module (7) and received by the planar detector.

2. Calibration apparatus according to claim 1, **characterised in that** the light-emitting, optoelectronic components are in the form of laser diodes (5).

3. Calibration apparatus according to claim 1 or 2, **characterised in that** the planar optical detectors are in the form of CCD matrices (6).

4. Calibration apparatus for a CCD line scanner according to one of the preceding claims, **characterised in that**, in order to obtain remote monitoring data, CCD lines (3) are disposed on the focal plane (4) of an optical system, and the planar optical detectors are disposed between the CCD lines (3) in the same focal plane (4).

5. Calibration apparatus according to claim 4, **characterised in that** the light-emitting, optoelectronic components are disposed between the focal plane (4) and the associated optical system (2) in such a manner that they are situated externally of the light beam of the useful radiation of the CCD lines (3).

6. Calibration apparatus according to one of the preceding claims, **characterised in that** the reference module (7) is in the form of a mirror which is embedded in concrete.

## Revendications

1. Dispositif d'étalonnage pour les paramètres d'orientation de systèmes de capteurs optoélectroniques numériques (1) dans des systèmes de support destinés à la reconnaissance à distance, comprenant un système de support avec une ou plusieurs installations de détermination de situation et de position dans le système de support permettant de déterminer les paramètres d'orientation en vol, au moins un composant optoélectronique (5) qui est réalisé de telle sorte qu'une lumière peut être émise dans une direction donnée par rapport au système de support, au moins un capteur optique surfacique (6) dans le système de support et au moins un module de référence (7) disposé au sol dont les paramètres d'orientation sont connus, l'analyse du rayonnement émis par le composant électroluminescent, réfléchi par le module de référence (7) et reçu par le capteur surfacique permettant de déterminer les décalages des paramètres d'orientation de l'installation ou des installations de détermination de situation et de position.

2. Dispositif d'étalonnage selon la revendication 1, **caractérisé en ce que** les composants optoélectroniques électroluminescents sont réalisés sous forme de diodes laser (5).

3. Dispositif d'étalonnage selon la revendication 1 ou 2, **caractérisé en ce que** les capteurs optiques surfaciques sont réalisés sous forme de matrices CCD (6).

4. Dispositif d'étalonnage pour un bloc de lecture de rangées de CCD selon l'une quelconque des revendications précédentes, **caractérisé en ce que** des rangées de CCD (3) sont disposées dans un plan focal (4) d'un objectif et les capteurs optiques surfaciques sont disposés entre les rangées de CCD (3) dans le même plan focal (4) pour obtenir des données de reconnaissance à distance.

5. Dispositif d'étalonnage selon la revendication 4, **caractérisé en ce que** les composants optoélectroniques électroluminescent sont disposés entre le plan focal (4) et l'objectif (2) associé de telle sorte que ceux-ci se trouvent en dehors du chemin optique du rayonnement utile des rangées de CCD (3).

6. Dispositif d'étalonnage selon l'une quelconque des revendications précédentes, **caractérisé en ce que** le module de référence (7) est réalisé sous la forme d'un miroir encastré dans le béton.
